# EUROPÄISCHE PATENTSCHRIFT

(11) **EP 1 353 172 B1**
(45) Veröffentlichungstag und Bekanntmachung des Hinweises auf die Patenterteilung: **15.03.2006**
(21) Anmeldenummer: 03008434.7
(22) Anmeldetag: 11.04.2003
(51) Int. Cl.: G01N 27/447

(54) **Kassette, System und 2D-Gelelektrophorese-Verfahren zum Trennen von Molekülen**
Cassette, system, and 2D gel electrophoresis method for separating molecules
Cassette, système, et procédé d'électrophorèse sur gel en deux dimensions pour séparer des molécules

(30) Priorität: 12.04.2002 CH 6112002; 02.05.2002 US 377326 P
(43) Veröffentlichungstag der Anmeldung: 15.10.2003
(73) Patentinhaber: Tecan Trading AG, 8708 Männedorf (CH)
(72) Erfinder: Ingenhoven, Nikolaus, 8713 Uerikon (CH); Höchli, Remo, 8635 Dürnten (CH); Rutishauser, Marcel, 8633 Wolfhausen (CH); Posch, Anton, 85567 Grafing (CH)
(74) Vertreter: Heusch, Christian

(56) Entgegenhaltungen:
- WO-A-00/65336
- DE-A- 19 930 253
- US-A- 5 228 971
- US-A- 5 338 426
- US-A- 5 627 022
- US-A- 6 113 766
- US-A- 6 156 182

## Beschreibung

Die Erfindung betrifft eine Gelelektrophoresekassette, welche zwei Platten und zumindest eine diese Platten beabstandende Dichtung umfasst entsprechend dem Oberbegriff des unabhängigen Anspruchs 1, sowie ein entsprechendes System zum Durchführen von 2D-Gelelektrophoresen entsprechend dem Oberbegriff des Anspruchs 10 und ein entsprechendes 2D-Gelelektrophorese-Verfahren entsprechend dem Oberbegriff des unabhängigen Anspruchs 15.

Vor mehr als 25 Jahren publizierte O'Farrell [O'Farrell PH. *J*. *Biol. Chem*. 1975, 250:4007-4021] ein Verfahren zum hochauflösenden Trennen von Proteinen des Bakteriums *Escherichia coli* mittels einer zwei-dimensionalen Polyacrylamid-GelElektrophorese (2D PAGE). In der Zwischenzeit wurde dieses Verfahren weiter entwickelt und zählt heute zu einer der am meisten angewandten Techniken zur Analyse und Charakterisierung von komplexen Proteingemischen. Die Anwendung der isoelektrischen Fokussierung (IEF) als ersten Schritt der 2D PAGE ermöglicht die Trennung der Proteine an Hand ihrer Ladung und kann in Polyacrylamid-Gelen mit oder ohne immobilisiertem pH-Gradient [vgl. Görg A, Postel W. und Günther S. The current state of two-dimensional electrophoresis with immobilized pH gradients. *Electrophoresis* 1988, 9: 531-546] durchgeführt werden. Im zweiten Schritt werden bevorzugt Polyacrylamid-Gele verwendet, welche als anionisches Detergens Natriumdodecylsulfat (SDS) enthalten und welche besonders geeignet sind, Proteine an Hand ihres Molekulargewichtes aufzutrennen. Damit ist die 2D PAGE fähig, Proteine an Hand von zwei unabhängigen Parametern, Ladung und Grösse, aufzutrennen.

Aus US 6,113,766 ist ein Gerät zum Rehydratisieren eines Geistreifens und zum Durchführen einer IEF als ersten Schritt einer 2D PAGE bekannt. Das Gerät umfasst eine Kammer, die sowohl für die Rehydratisierung eines vorfabrizierten und getrockneten Gelstreifens als auch zum Durchführen der IEF geeignet ist. Der Gelstreifen wird dazu so in der Kammer platziert, dass er - Gelseite nach unten - mit seinen beiden Endbereichen auf je eine Elektrode im Kammerboden zu liegen kommt. Die Kammer ist mit einem Deckel verschliessbar, welcher über Druckteile einen gewissen Druck auf den Geistreifen ausübt, so dass das Gel auf die Elektroden gepresst wird. Anschliessend an die IEF, d.h. die Auftrennung der Proteine in einer ersten Dimension, wird der Geistreifen aus der Kammer herausgenommen und für die Durchführung der Auftrennung der Proteine in der zweiten Dimension auf ein SDS-Polyacrylamid-Gel gelegt. Dabei kann der Gelstreifen beschädigt werden, was den Erfolg der gesamten 2D Gelelektrophorese in Frage stellen kann. Zudem gestaltet sich das Einstellen eines Druckes, der gross genug ist um die elektrische Kontaktierung für die IEF zu gewährleisten, der jedoch so gering ist, dass das Gel nicht beschädigt wird, als äusserst schwierig und aufwändig, weil der Rehydratisierungsgrad des IEF-Gels dessen Volumen zusätzlich beeinflusst.

Eine Lösung des erstgenannten Problems ist aus DE 198 31 210 bekannt, worin ein praktisch gleichzeitiges Giessen der Gele für die erste und zweite Dimension in einer gemeinsamen Vorrichtung offenbart wird. Das IEF-Gel ist vom SDS-PAGE-Gel nur durch ein schmales Element getrennt, welches nach Abschluss der IEF herausgezogen werden kann und so einen Zwischenraum offen lässt, der zum Kontaktieren der beiden Gele mit einem Kontaktgel gefüllt werden kann. Darauf kann die SDS-PAGE durchgeführt werden. Diese Lösung hat den Vorteil, dass der IEF-Gelstreifen zwischen der ersten und zweiten Dimension einer 2D PAGE überhaupt nicht berührt oder transportiert werden muss. Nachteilig ist aber, dass beide Gele verworfen werden müssen, wenn die IEF nicht erfolgreich war. Zudem ist bekannt, dass die Reproduzierbarkeit von IEF-Resultaten wesentlich verbessert wird, wenn IEF-Gele des gleichen Batchs verwendet werden. Dies würde bedeuten, dass zur gleichen Zeit und unter den gleichen Bedingungen sehr viele Gele für die erste und zweite Dimension gegossen werden müssen, was sehr aufwendig werden kann.

Eine andere Lösung des erstgenannten Problems ist in US 5,993,627 offenbart. In einem vollautomatisierten System für das Durchführen einer 2D-Gelelektrophorese werden sowohl Gele für die erste als auch für die zweite Dimension gegossen. Das Gel umfasst auch Vorrichtungen zum Durchführen der Elektrophorese, der anschliessenden Gelfärbung und Auswertung. Das System basiert auf der Produktion von IEF-Gelen auf einem "backing material" aus Gelbond®, aus dem Übertragen dieses Gels in eine Form zum Giessen des SDS-Gels, in welches gleichzeitig auch eine massive Elektrode eingegossen wird. Das System benötigt mehrere Roboter-Arme bzw. -Greifwerkzeuge zum Fassen und Transportieren der Gele von einem Behälter (IEF-Kammer) zum anderen (SDS-PAGE-Kammer, Staining-Kammer und Scanning-Bett). Das Gelbond®-Material verbessert zwar die Stabilität des IEF-Streifens, das vorgeschlagene Verfahren ist aber kompliziert und aufwändig, die Systeme entsprechend teuer.

Der vorliegenden Erfindung liegt die Aufgabe zu Grunde, eine alternative Vorrichtung zu schaffen, welche aus dem Stand der Technik bekannte Nachteile beseitigt oder zumindest minimiert.

Die Aufgabe wird mit einer Gelektrophoresekasette gemäß der der Merkmafskombination des unabhängigen Anspruchs 1, ein System gemäß der Merkmalskombination des Anspruchs 10 und ein Verfahren gemäß der Merkmalskombination des unabhängigen Anspruchs 15 gelöst. Vorteilhafte Weiterbildungen und zusätzliche Merkmale der Erfindung ergeben sich aus den abhängigen Ansprüchen.

Die Erfindung soll nun an Hand von schematischen und beispielhaften Zeichnungen, welche den Umfang der Erfindung nicht einschränken sollen, näher erläutert werden. Dabei zeigt:
- Fig. 1: einen senkrechten Querschnitt durch eine geschlossene IEF-Kammer mit eingelegtem IEF- Gelstreifen;
- Fig. 2: einen senkrechten Längsschnitt durch eine geschlossene IEF-Kammer mit eingelegtem Gelstreifen, entlang der Schnittlinie A--A in Fig. 1;
- Fig. 3: einen senkrechten Querschnitt durch eine SDS-PAGE-Kassette mit eingesetztem Streifenhalter und IEF-Gel, gemäss einer ersten Ausführungsform;
- Fig. 4: einen vergrösserten Detailschnitt (vgl. Kreis in Fig. 3) durch die Dichtung der SDS-PAGE-Kassette;
- Fig. 5: eine Draufsicht auf die Frontplatte einer zusammengesetzten SDS-PAGE-Kassette einer ersten Ausführungsform vor dem Einsetzen eines Streifenhalters;
- Fig. 6: eine Frontalansicht auf eine zusammengesetzte SDS-PAGE-Kassette einer ersten Ausführungsform mit weggenommener Frontplatte;
- Fig. 7: eine Draufsicht auf die Frontplatte einer zusammengesetzten SDS-PAGE-Kassette einer ersten Ausführungsform, beim Giessen des SDS-Gels;
- Fig. 8: eine Draufsicht auf die Frontplatte einer zusammengesetzten SDS-PAGE-Kassette einer ersten Ausführungsform nach dem Einsetzen eines Streifenhalters und dem Ausgiessen mit einem Kontaktgel, beim Durchführen der SDS-PAGE;
- Fig. 9: eine Draufsicht auf die Innenseite der Frontplatte einer zusammengesetzten SDS-PAGE-Kassette einer zweiten Ausführungsform, beim Giessen des SDS-Gels;
- Fig. 10: eine Draufsicht auf die Aussenseite der Frontplatte einer zusammengesetzten SDS-PAGE-Kassette einer zweiten Ausführungsform, beim Giessen des SDS-Gels;
- Fig. 11: einen vertikalen Querschnitt durch eine geöffnete SDS-PAGE-Kassette einer zweiten Ausführungsform, beim Abnehmen des Gels mit einem Abnahmezylinder.

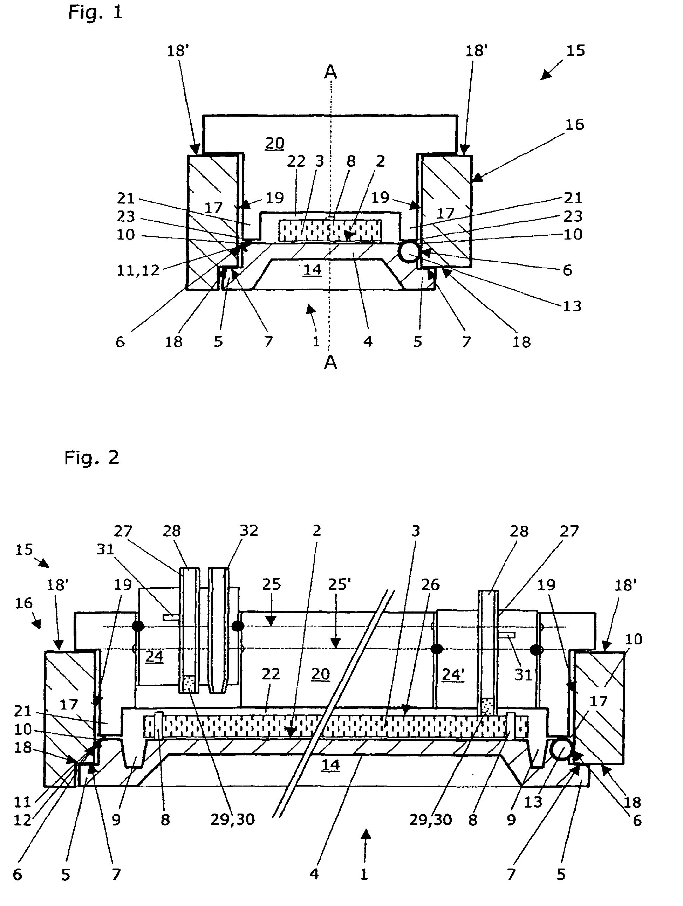

Figur 1 zeigt einen Streifenhalter 1 mit einer eine Tragfläche 2 - zum Aufnehmen eines Gelstreifens 3 für die Trennung von Molekülen mittels Gelelektrophorese - umfassenden Grundplatte 4. Die Grundplatte 4 umfasst zumindest einen gegenüber der Tragfläche 2 abgesetzten bzw. tiefergesetzten Anschlag 5 und zumindest eine Dichtfläche 6. Dieser Anschlag ist zum Beaufschlagen von Gegenflächen 7 einer Elektrophoresekammer ausgebildet, wodurch die Einbautiefe des einen Gelstreifen 3 tragenden Streifenhalters 1 in dieser Elektrophoresekammer bestimmt ist und wobei die Dichtfläche 6 einen dichtenden Einbau des einen Gelstreifen tragenden Streifenhalters 1 in diese Elektrophoresekammer gewährleistet.

Der Anschlag 5 ist hier einstückig mit der Grundplatte 4 ausgebildet und bildet eine umlaufend zusammenhängende Anschlagfläche. Alternativ kann vorgesehen sein (nicht gezeigt), dass die Anschlagfläche unterteilt oder durch an der Grundplatte 4 befestigte Bügel mit der gleichen Wirkung ersetzt ist. Während die Grundplatte 4 vorzugsweise aus einem chemisch inerten, elektrisch isolierenden Material mit guten Wärmeleiteigenschaften gefertigt ist, können solche Bügel auch aus einem anderen Material (z.B. aus Metall) hergestellt und z.B. in die Grundplatte eingegossen oder eingeschraubt sein.

Die Grundpatte 4 weist im Bereich der beiden Tragflächenenden vorzugsweise je einen senkrechten Stift 8 auf, welcher zum durchdringenden Positionieren des Gelstreifens 3 ausgebildet ist. Ausserhalb der Tragfläche 2 für den Geistreifen 3 kann die Grundplatte zudem Vertiefungen 9 zur Aufnahme von Pufferlösung aufweisen. Die Dichtfläche 6 kann als eine an die äusserste, obere Kante 10 der Grundplatte angeformte Lippendichtung 11 mit einer oder zwei Dichtlippen 12 ausgebildet sein. Diese Lippendichtung 11 wird bevorzugt einstückig mit dem Streifenhalter 1 in einem 2-Komponenten-Spritzgussverfahren hergestellt, wobei die Dichtlippen 12 bevorzugt aus einem elastischeren Kunststoff hergestellt werden als der Streifenhaiter 1. Alternativ zu einer angespritzten Lippendichtung kann auch ein O-Ring 13 an der Stelle der Lippendichtung 11 angeordnet werden, dabei kann - je nach dem Material des Streifenhalters - der O-Ring 13 in eine umlaufende Nut eingelegt oder an den Streifenhalter angespritzt bzw. mit dem Streifenhalter zusammen in einem 2-Komponenten-Spritzgussverfahren hergestellt werden. Ausführungsformen, welche eine kostengünstige Massenproduktion von als Verbrauchsmaterial konzipierten Streifenhaltern begünstigen, werden bevorzugt.

Wie schon bemerkt, wird die Grundplatte 4 bevorzugt aus einem chemisch inerten, elektrisch isolierenden Material gefertigt, besonders bevorzugt sind dabei spritzgussfähige Kunststoffe. Die Grundplatte 4 soll zusätzlich gute Wärmeleiteigenschaften aufweisen, damit währen dem Rehydratisieren des IEF-Gels und vor allem während der IEF-Gelelektrophorese die Temperatur des Gels besser kontrolliert werden kann. Vorzugsweise weist die Grundplatte zu diesem Zweck eine untere Einsenkung 14 zur Aufnahme einer Kühlrippe (nicht gezeigt) eines Kühlaggregats auf.

Des Weiteren zeigt Figur 1 eine Kammer 15 für die isoelektrische Fokussierung (IEF) von Molekülen in Geistreifen 3. Diese Kammer umfasst einen Streifenhalter 1 und einen Rahmen 16 mit einer umlaufenden Wand 17 sowie einer unteren und oberen Gegenfläche 18,18'. Der Streifenhalter 1 ist so in den Rahmen 16 eingesetzt, dass der zumindest eine Anschlag 5 die untere Gegenfläche 18 beaufschlägt und dass die untere Dichtlippe 12 dichtend an einer inneren Oberfläche 19 der Wand 17 anliegt. Die Kammer umfasst zudem einen Deckel 20 zum Beaufschlagen der oberen Gegenfläche 18' des Rahmens 16. Der Deckel 20 weist bevorzugt eine Verdickung in Form eines umlaufenden Stegs 21 auf, welche in die Kammer 15 hinein ragt und den Innenraum 22 der Kammer über dem Gelstreifen 3 limitiert. Dabei beaufschlagen die äusserste untere Kante 23 der Verdickung 21 eine Dichtlippe 12 der Lippendichtung 11 dichtend. Alternativ wird ein am Streifenhalter 1 befestigter O-Ring 13 ebenfalls von der unteren Kante 23 der Verdickung 21 beaufschlagt. Der Deckel ist vorzugsweise mit Kontaktstiften oder anderen geeigneten, trennbaren Kontaktmitteln (nicht dargestellt) versehen, so dass der Stromkreis zur Sicherheit des Bedienungspersonals erst mit dem Schliessen der Kammer 15 geschlossen und beim Öffnen der Kammer zwangsweise unterbrochen wird.

Figur 2 zeigt einen senkrechten Längsschnitt durch eine geschlossene IEF-Kammer mit eingelegtem Gelstreifen. Der Schnitt verläuft entlang der in Figur 1 mit A--A bezeichneten Schnittlinie. In den Deckel 20 können zwei Elektrodenhalterungen 24,24' eingesetzt werden. Diese Elektrodenhalterungen sind vorzugsweise in zwei definierte Niveaus 25,25' einsetzbar ausgebildet und umfassen je eine senkrecht zur Oberfläche 26 eines auf der Tragfläche 2 des Streifenhalters 1 liegenden Gelstreifens 3 beschränkt bewegliche Elektrode 27. Diese Elektroden 27 sind als Röhrchen aus elektrisch nicht-leitendem Material (z.B. Glas, Kunststoff, Keramik) mit einer offenen oberen Öffnung 28 ausgebildet und weisen eine die untere Öffnung 29 teilweise verschliessenden Fritte 30 auf. Alternativ kann für die Röhrchen auch leitendes Material verwendet werden. Die Elektroden 27 weisen zudem einem seitlich abzweigenden elektrischen Kontakt 31 auf. Die hohlen Elektroden können mit Pufferlösung zumindest teilweise gefüllt werden und stellen damit eine elektrisch leitende Verbindung zwischen einer Hochspannungssteuerung (nicht dargestellt) und den zwei Polen eines Gelstreifens 3 dar. Die Fritte 30 ist ein für den Puffer und für während der IEF zu den Elektroden 27 migrierende Ionen oder Überschuss-Proteine durchlässiger Filter, welcher dank seiner Durchlässigkeit eine Kristallisation dieser Partikel an den Elektroden verhindert. Speziell bei Vorrichtungen zur automatisierten Durchführung der IEF-Elektrophorese wird eine dank dieser Elektroden 27 verminderte Verschmutzungsrate bzw. einfachere Reinigung geschätzt. Trotz dieser Durchlässigkeit stellt die Fritte 30 für den Puffer im Röhrchen einen so grossen Flusswiderstand dar, dass er nicht wegen seines hydrostatischen Druckes spontan auslaufen kann.

Alternativ zu der beschriebenen offen Version können die Elektroden-Röhrchen an ihrem oberen Ende bis auf eine Zuleitung (Einlauf, nicht dargestellt) verschlossen sein. Ein Auslauf wird dann an der Stelle des seitlich abzweigenden elektrischen Kontakts 31 angeordnet. Ein- und Auslauf werden dann an ein Umwälzsystem zur Temperierung und/oder Filtrierung des Puffers angeschlossen. Über den Ein- oder Auslauf wird auch die elektrische Verbindung zu einer geeigneten Hochspannungssteuerung hergestellt.

Der erste Teil (erste Dimension) eines die erfindungsgemässen Streifenhalter 1 bzw. Kammer 15 verwendenden 2D-Gelelektrophorese-Verfahrens verläuft bevorzugt wie folgt:
- Ein dehydratisierter Gelstreifen 3 wird auf der Tragfläche 2 eines Streifenhalters 1 positioniert.
- Dieser Streifenhalter 1 wird in einen Rahmen 16 mit einer umlaufenden Wand 17 sowie einer unteren und oberen Gegenfläche 18,18' so eingesetzt, dass der zumindest eine Anschlag 5 die untere Gegenfläche 18 beaufschlägt und die Dichtfläche 6 dichtend an einer inneren Oberfläche 19 der Wand 17 anliegt.
- Der Gelstreifen 3 im Innenraum dieser Kammer 15 wird mit Rehydratisierlösung überschichtet. Wahlweise kann zum Vermeiden von Verdunstungsverlusten der Gelstreifen 3 vor dem Auftragen der Probe mit Öl überschichtet werden. Dabei kann eine Probe bereits in dieser Rehydratisierlösung enthalten sein; ist dies nicht der Fall, kann die Probe später (bevorzugt streifenförmig bei offener Kammer bzw. über ein Probenröhrchen 32 bei geschlossener Kammer und eingeschalteter Hochspannung; vgl. unten) auf den Gelstreifen aufgetragen bzw. in den Geistreifen eingebracht werden.
- Die Kammer wird mit einem Deckel 20 zum Beaufschlagen der oberen Gegenfläche 18' des Rahmens 16 und mit zwei in diesem Deckel 20 einsetzbaren Elektrodenhalterungen 24,24' geschlossen. Dabei werden die Elektrodenhalterungen in ein oberes Niveau 25 eingesetzt, wodurch je eine Elektrode 27, welche jeweils senkrecht zur Oberfläche 26 eines auf der Tragfläche 2 des Streifenhalters 1 liegenden Gelstreifens 3 beschränkt beweglich sind, beabstandet zu dieser Oberfläche 26 stehen.
- Nachdem die Probe in das Gel hinein diffundiert ist, werden die Elektrodenhalterungen auf ein unteres Niveau 25' abgesenkt, wodurch die beiden Elektroden 24,24' diese Oberfläche 26 des Gelstreifens 3 kontaktieren.
- Der Gelstreifen 3 wird über die Elektroden 24,24' unter elektrische Hochspannung gesetzt, bis die isoelektrische Fokussierung (IEF) der Moleküle im Gel stattgefunden hat. Bevorzugt wird dabei die elektrische Hochspannung mit einem Einzelkanalsteuergerät erzeugt, welches die elektrischen Stromparameter regelt und zudem abrufbar und z.B. auf einem Bildschirm anzeigbar speichert.

Das Auftragen der Probe auf das Gel kann - gemäss einer ersten Variante des erfindungsgemässen Verfahrens - dadurch geschehen, dass die Probe bei offener Kammer 15 streifenförmig auf das Gel 3 aufgetragen wird. Dies wird bevorzugt mittels eines Pipettierautomaten, der reproduzierbar eine gewissen Menge Probe abgeben kann) ausgeführt. Dann wird die Kammer 15 mit einem Deckel 20 zum Beaufschlagen der oberen Gegenfläche 18' des Rahmens 16 und mit zwei in diesem Deckel 20 einsetzbaren Elektrodenhalterungen 24,24' geschlossen. Dabei werden die Elektrodenhalterungen 24,24' in ein oberes Niveau 25 eingesetzt, wodurch je eine Elektrode 27, welche jeweils senkrecht zur Oberfläche 26 eines auf der Tragfläche 2 des Streifenhalters 1 liegenden Getstreifens 3 beschränkt beweglich sind, beabstandet zu dieser Oberfläche (26) stehen, bis die Probe in das Gel hinein diffundiert ist. Die beschriebene, beschränkte Beweglichkeit der Elektroden in Z-Richtung kann auf unterschiedliche Art und Weise bewerkstelligt werden. Die Elektroden 27 können in Z-Richtung (senkrecht zur Oberfläche des im Wesentlichen horizontal liegenden IEF-Gels) frei geführt sein, so dass sie mit ihrem Eigengewicht (bestehend aus Röhrchen, Fritte und Pufferfüllung) das IEF-Gel beaufschlagen. Die Elektroden 27 können mittels eines oder mehrerer Federelemente (nicht gezeigt) so in ihrer Z-Position eingestellt werden, dass sie die IEF-Geleoberfläche mit einem definierten Druck beaufschlagen. Die Z-Beweglichkeit der Elektroden ist damit einerseits durch zumindest ein Federelement und/oder einen Endanschlag (beides nicht gezeigt) beschränkt, so dass die Elektroden bei in oberem Niveau 25 eingesetzter Elektrodenhalterung 24,24' die Geloberfläche 26 nicht berühren können. Beide Varianten der Z-Beweglichkeit ermöglichen ein sanftes aber sicheres Berühren der Geloberfläche, so dass der elektrische Kontakt für die IEF gewährleistet ist, ohne dass das Gel beschädigt wird. Die Elektrodenhalterungen 24,24' werden anschliessend auf ein unteres Niveau 25' abgesenkt, wodurch die beiden Elektroden 27 diese Oberfläche 26 - für das Durchführen der IEF - kontaktieren.

Das Auftragen der Probe auf das Gel kann - gemäss einer zweiten Variante des Verfahrens - dadurch geschehen, dass die Kammer 15 mit einem Deckel 20 zum Beaufschlagen der oberen Gegenfläche 18' des Rahmens 16 und mit zwei in diesem Deckel 20 einsetzbaren Elektrodenhalterungen 24,24' geschlossen wird, indem die Elektrodenhalterungen direkt in ein unteres Niveau 25' eingesetzt werden. Dadurch kontaktieren je eine Elektrode 27 sowie zumindest ein Probenröhrchen 32, welche alle jeweils senkrecht zur Oberfläche 26 eines auf der Tragfläche 2 des Streifenhalters 1 liegenden Gelstreifens 3 beschränkt beweglich sind (vgl. Variante 1) diese Oberfläche 26. Darauf wird die Probe unter Anlegen einer elektrischen Spannung über dem Gel aus dem Probenröhrchen 32 in den Gelstreifen hinein gezogen.

Speziell bevorzugt wird die Durchführung dieses Verfahrens in einem entsprechenden automatischen System (nicht gezeigt), dabei kann dieses System eine Arbeitsplattform zum Anordnen einer oder mehrerer IEF-Kammern umfassen und mit einem Kühlgerät zum Kühlen der IEF-Kammern ausgestattet sein.

Vorzugsweise umfasst ein solches System zudem einen Roboterarm zum Transferieren von einzeln Teilen der Kammer von und zu diesen IEF-Kammern bzw. SDS-PAGE-Kassetten sowie einen Rechner zum Steuern des Roboters, eine Einzelkanal-Hochspannungssteuerung zur individuellen Ansteuerung der IEF-Kammern und einen Bildschirm. Mit einem solchen System, das vorzugsweise auch einen Pipettierautomaten mit mehreren Kanälen umfasst, kann auch die Rehydratisierlösung automatisch und in einer definierten Menge zugegeben werden, so dass keine überschüssige Rehydratisierlösung aus der Kammer herausgenommen werden muss.

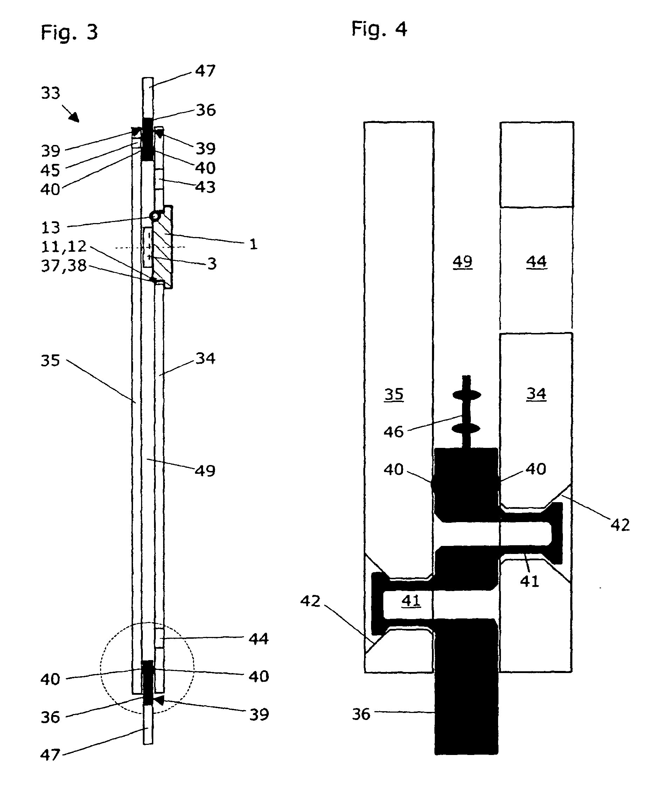

Figur 3 zeigt einen senkrechten Querschnitt durch eine SDS-PAGE-Kassette 33 für das Ausführen einer an die isoelektrische Fokussierung anschliessenden Elektrophorese in einer zweiten Dimension mit einem eingesetztem Streifenhalter 1 und einem IEF-Gelstreifen 3. Diese Kassette 33 gemäss einer ersten Ausführungsform umfasst zwei Platten 34,35 und zumindest eine diese Platten beabstandende Dichtung 36. Ein Streifenhalter 1 ist so in eine Aussparung 37 in einer dieser Platten 34 eingesetzt, dass der zumindest eine - vorzugsweise um das Mass der Plattendicke abgesetzte bzw. tiefergesetzte - Anschlag 5 die als Gegenfläche 7 wirkende äussere Oberfläche der Platte 34 beaufschlägt und die Dichtfläche 6 dichtend an der inneren Oberfläche 38 der Aussparung 37 anliegt. Dabei füllt der Geistreifen 3 den Zwischenraum 49 zwischen den Platten 34,35 beinahe aus und die Tragfläche 2 ist im Wesentlichen bündig zur Innenoberfläche der Frontplatte 34.

Die Dichtung 36 ist hier als eine im Wesentlichen flache, einstückige, ringförmige Dichtung ausgebildet, die im Wesentlichen im Bereich des äusseren Randes der Platten 34,35 anordenbar ist und wobei die Dichtung 36 auf beiden den Platten anliegenden Seiten 39 je eine ringförmig umlaufende, elastisch deformierbare Dichtkante 40 umfasst. Die Dichtung 36 umfasst ferner im Bereich ausserhalb ihrer Dichtkante 40 liegende Befestigungsnoppen 41, welche zum Einkücken in entsprechende, in die beiden Platten 34,35 eingearbeitete Löcher 42 ausgebildet sind. Zumindest eine der Platten (hier die Frontplatte 34) umfasst im Bereich des innerhalb von der Dichtkante 40 definierten Raums angeordnete erste Öffnungen 43 zum Einleiten eines Gels, Puffers oder Färbemittels bzw. zweite Öffnungen 44 zum Entlüften oder zum Einleiten eines Gels, Puffers oder Färbemittels. Front- und Rückplatte 34,35 umfassen zudem im Bereich des innerhalb von der Dichtung 36 abgedeckten Raums angeordnete, dritte Öffnungen 45 zum Einleiten eines Trennmediums.
Figur 4 zeigt einen vergrösserten Detailschnitt (entsprechend dem Kreis in Fig. 3) durch die Dichtung einer SDS-PAGE-Kassette 33. Die im Wesentlichen flache Dichtung 36 ist im Wesentlichen im Bereich des äusseren Randes der Platten 34,35 angeordnet und weist auf beiden den Platten 34,35 anliegenden Seiten 39 je eine ringförmig umlaufende, elastisch deformierbare Dichtkante 40 auf. Die im Bereich ausserhalb ihrer Dichtkante 40 liegenden Befestigungsnoppen 41, sind alternierend angeordnet, so dass die Dichtung nach dem Fertigungsprozess zu ihrer Herstellung (z.B. Spritzgiessen) einfach entformt werden kann. Trotzdem sind bevorzugt immer zwei Befestigungsnoppen 41 so nahe beieinander angeordnet, dass sie wie eine direkte Verbindung zwischen den Platten 34,35 wirken. Beim Zusammensetzen der Kassette 33 bewirkt das Einklicken der Befestigungsnoppen 41 in die dafür vorgesehenen Löcher 42 der Platten 34,35, dass die drei Hauptelemente provisorisch zusammengehalten werden und dass die Dichtung 36 beim Einbau der Kassette 33 in eine Haltevorrichtung (nicht gezeigt) richtig positioniert bleibt.

Die Platten 34,35 sind vorzugsweise aus Glas hergestellt. Die Dichtung 36 weist bevorzugt eine Elastizität auf, welche im Wesentlichen derjenigen eines SDS-Gels entspricht, wobei die Zähigkeit der Dichtung jedoch grösser ist, als diejenige des Gels. Damit das SDS-Gel nicht angefasst werden muss, bzw. damit das SDS-Gel schonend gehalten werden kann, umfasst die Dichtung 36 in ein solches Gel einzupolymerisierende Befestigungslaschen 46. Diese Befestigungslaschen weisen bevorzugt ein Reliefmuster (mit Netzstruktur, Löchern, Noppen und dergleichen) auf, das geeignet, ist einen intimen Kontakt zum SDS-Gel herzustellen. Bevorzugt wird eine chemische Bindung zwischen dem Gel und den Befestigungslaschen der Dichtung erzeugt.

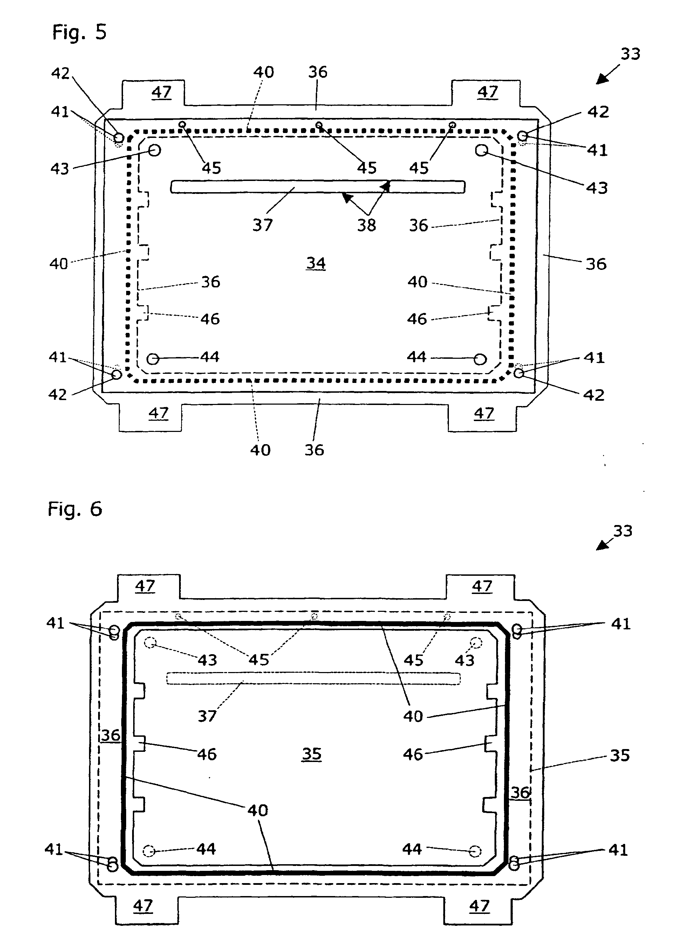

Figur 5 zeigt eine Draufsicht auf die Frontplatte 34 einer zusammengesetzten SDS-PAGE-Kassette 33, gemäss der ersten Ausführungsform, vor dem Einsetzen eines Streifenhalters 1. Die Aussparung 37 zum Einsetzen des Streifenhalters 1 liegt in der oberen Hälfte der vorzugsweise in dieser senkrechten Lage für die SDS-PAGE eingesetzten Kassette 33. Die Frontplatte 34 weist bevorzugt im Bereich des innerhalb von der Dichtkante 40 definierten Raums angeordnete erste Öffnungen 43 bzw. zweite Öffnungen 44 zum Entlüften oder zum Einleiten eines Gels, Puffers oder Färbemittels auf. Im Bereich des innerhalb von der Dichtung 36 abgedeckten Raums sind vorzugsweise zudem dritte Öffnungen 45 zum Einleiten eines Trennmediums angeordnet. Dieses Trennmedium kann ein Gas (Luft, Stickstoff, etc.) oder eine Flüssigkeit (z.B. Puffer) sein und dient zum schonenden Ablösen des PAGE-Gels von der Platte 34, damit diese Oberfläche des PAGE-Gels anschliessend einer Färbelösung ausgesetzt werden kann.

Die Dichtung 36 ist im Wesentlichen im Bereich des äusseren Randes der Platten 34,35 anordenbar, umfasst die besagte ringförmig umlaufende, elastisch deformierbare Dichtkante 40 und ragt - zum Schutz der vorzugsweise aus Glas bestehenden Platten 34,35 - bevorzugt rund um die Platten 34,35 herum über deren äussersten Rand hinaus. Die Dichtung 36 ist im Wesentlichen flach, einstückig und ringförmige ausgebildet, sie definiert den Abstand zwischen der Frontplatte 34 und der Rückplatte 35 und weist bevorzugt eine Elastizität auf, welche im Wesentlichen derjenigen eines SDS-Gels entspricht, wobei die Zähigkeit der Dichtung jedoch grösser ist, als diejenige des Gels. Zur innigen Verbindung zwischen Dichtung und SDS-PAGE-Gel umfasst die Dichtung 36 in ein solches Gel einzupolymerisierende Befestigungslaschen 46 umfasst. Die Dichtung dient damit als Rahmen zum Halten des Gels, welche nie direkt angefasst werden muss. Zum Greifen der Dichtung mit einem Werkzeug bzw. einem Roboter weist diese an ihrer Aussenseite bevorzugt Haltelaschen 47 auf. Im Bereich ausserhalb ihrer Dichtkante 40 umfasst die Dichtung 36 Befestigungsnoppen 41, welche zum Einklicken in entsprechende, in die beiden Platten 34,35 eingearbeitete Löcher 42 ausgebildet sind.

Eine provisorisch (bevorzugt von Hand) zusammengesetzte Kassette 33, besteht aus einer Frontplatte 34, einer Rückplatte 35 und einer dazwischen angeordneten und die beiden Platten 34,35 verbindenden Dichtung 36. Eine solche Kassette kann auch mit Hilfe eines Roboters transportiert werden, indem der Roboter mit geeigneten Mitteln die Haltelaschen ergreift; dafür hält die Dichtung 36 die beiden Platten 34,35 über ihre Noppen 41 mit genügender Sicherheit zusammen.

Figur 6 zeigt eine Frontalansicht auf eine zusammengesetzte SDS-PAGE-Kassette 33 mit weggenommener Frontplatte, gemäss der ersten Ausführungsform; die Aussparung 37 und die ersten Öffnungen 43 bzw. zweiten Öffnungen 44 der Frontplatte 34 sind nur gestrichelt gezeichnet. Im Bereich des innerhalb von der Dichtung 36 abgedeckten Raums sind vorzugsweise zudem dritte Öffnungen 45 zum Einleiten eines Trennmediums angeordnet. Dieses Trennmedium kann ein Gas (Luft, Stickstoff, etc.) oder eine Flüssigkeit (z.B. Puffer) sein und dient zum schonenden Ablösen des PAGE-Gels von der Rückplatte 35, damit diese Oberfläche des PAGE-Gels anschliessend z.B. einer Färbelösung ausgesetzt werden kann.

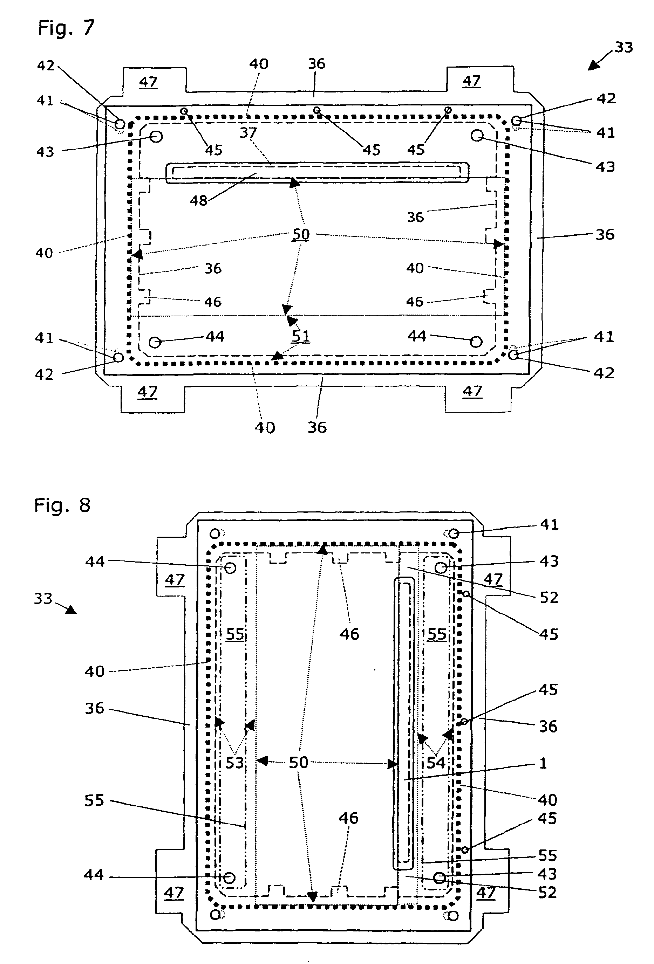

Der zweite Teil (zweite Dimension) eines die erfindungsgemässen Streifenhalter 1 bzw. Kassetten 33 verwendenden 2D-Gelelektrophorese-Verfahrens verläuft bevorzugt wie folgt:
- Zwei Platten 34,35 und eine Dichtung 36 werden von Hand mittels Einklicken der Befestigungsnoppen 41 der Dichtung in die dafür vorgesehenen Löcher 42 der Platten provisorisch aneinander befestigt und gegeneinander positioniert.
- Ein Gelkamm 48 wird in die Aussparung 37 der Frontplatte 34 einer SDS-PAGE-Kassette 33 und gegenüber der inneren Oberfläche 38 der Aussparung 37 dichtend eingesetzt.
   Alternativ dazu kann ein Blinddeckel (nicht gezeigt) dichtend in die Aussparung 37 eingesetzt werden.
- Die Kassette 33 wird zwischen zwei plattenförmige, die Platten 34,35 flächig kontaktierende Wärme/Kühlelemente bzw. Temperaturkontrollwände (nicht gezeigt) eingelegt und wie in Figur 7 dargestellt quer aufrecht gehalten.
- Der eingesetzte Gelkamm 48 definiert in dieser Lage der Kassette 33 die Oberkante des zu giessenden SDS-Gels zumindest im Bereich des später einzusetzenden IEF-Gelstreifens 3.
   Alternativ dazu wird Propanol, Butanol, bzw. eine andere mit dem SDS-Gel nicht-mischbare und in ihrem spezifischen Gewicht leichtere (und deshalb dem SDS-Gel aufschwimmende) Flüssigkeit, welche zumindest den Zwischenraum 49 zwischen den Platten 34,35 und den Dichtkanten 40 um einige Millimeter füllt, nach dem Giessen des SDS-Gels 50 über eine erste Öffnung 43 in den Zwischenraum 49 eingeleitet. Dabei entweicht überflüssiges, im Zwischenraum 49 anwesendes Gas aus der andern ersten Öffnung 43. Diese aufschwimmende Flüssigkeit wird ebenfalls und als Alternative zum Gelkamm 48 die Oberkante des zu giessenden SDS-Gels definieren.
- Eine gewünschte Giesstemperatur wird nun über die flächig kontaktierenden Temperaturkontrollwände (nicht gezeigt) eingestellt. Vorzugsweise beträgt diese Giesstemperatur 37°C. Über Saugöffnungen (nicht dargestellt) in den Wärme/Kühlelementen wird zwischen diesen und den Platten vorzugsweise ein Unterdruck erzielt, was den Kontakt und damit den Wärmeübergang zwischen den Platten und den Temperaturkontrollwänden noch verbessert. Über die zweiten Öffnungen 44 wird nun flüssiges SDS-Gel 50 in den Raum 49 zwischen den Platten 34,35 eingefüllt, bis die Oberkante des Gels 50 den Gelkamm 48 berührt bzw. bis die Lage der gewünschten Phasengrenze SDS-Gel/aufschwimmende Flüssigkeit dieses Niveau erreicht. Das überflüssige Gas im Zwischenraum 49 entweicht dabei wieder über die Öffnungen 43. Mittels eines definierten Volumens Glycerin 51 bzw. mit einer anderen, mit dem SDS-Gel 50 nicht mischbaren und ein höheres spezifisches Gewicht aufweisenden (und sich deshalb dem Gel unterschichtenden) Flüssigkeit wird gleichzeitig ein erstes Puffervolumen 53 definiert.
- Bei einer bevorzugten Polymerisiertemperatur von ebenfalls 37°C wird das SDS-Gel 50 vernetzt. Dabei verhindert der Unterdruck zwischen den Platten 34,35 und den Temperaturkontrollwänden, dass sich die Platten entsprechend dem Schwinden des polymerisierenden Gels verformen. Darauf wird der Gelkamm 48 bzw. die überschwimmende Flüssigkeit und der Blinddeckel entfernt und der Streifenhalter 1 mit dem IEF-Gelstreifen 3 der ersten Dimension in die Aussparung 37 dichtend eingesetzt.
- Ein definiertes Volumen Kontaktgel 52 (vorzugsweise Agarose) wird über eine der ersten Öffnungen 43 zugegeben bis der IEF-Gelstreifen 3 vollständig umhüllt und mit dem SDS-Gel verbunden ist. Dabei entweicht überflüssiges Gas aus dem Zwischenraum 49 über die andere erste Öffnung 43 und der Zwischenraum 49 zwischen den Platten wird nicht restlos ausgefüllt, so dass ein zweites Puffervolumen 54 gebildet wird. Das Kontaktgel wird ebenfalls auspolymerisiert.
- Die Kassette 33 wird nun um ca. 90° gedreht, so dass sie - wie in Figur 8 dargestellt - zumindest im Wesentlichen längs aufrecht steht. Die beiden Puffervolumen 53,54 werden nun mit Puffer durchgespült.
- Über die beiden Pufferleitungen oder durch Kontaktierung von innerhalb der beiden Puffervolumina 53,54 zusätzlich vorgesehenen elektrisch leitenden Schichten 55 wird mittels einer Hochspannungssteuerung ein Potenzial angelegt und die Elektrophorese in der zweiten Dimension - bevorzugt bei einer Temperatur von 20°C vollzogen. Der Puffer für jeden Pol kann dabei an ein Umwälzgerät zur Temperierung und Filterung des Puffers (nicht gezeigt) angeschlossen sein. Dank der bevorzugten, längs aufrecht stehenden Position der Kassette (vgl. Fig. 8) während der SDS-PAGE werden sich eventuell bildende Gasblasen in den Pufferlösungen aus den Puffervolumen 53,54 hinausbefördert und können die Elektrophorese nicht beeinflussen.
- Über die dritten Öffnungen 45 wird ein Trennmedium, ein Gas (Luft, Stickstoff, etc.) oder eine Flüssigkeit (z.B. Puffer) zwischen die Rückplatte 35 und die Dichtung 36 bzw. das SDS-Gel 50 geleitet, so dass das PAGE-Gel sich schonend von der Platte 35 ablöst. Dabei wird die Platte 35 mittels Unterduck von der dahinterliegenden Temperaturkontrollwand gehalten. Der Rest der Kassette 33 (das Gel 50, die Dichtung 36 und die Frontplatte 34) wird ebenfalls per Unterdruck von der entsprechenden Temperaturkontrollwand gehalten. Die Temperaturkontrollwände werden vorzugsweise linear auseinander bewegt und in den dabei entstehenden Zwischenraum ein Rahmen (nicht gezeigt) eingefügt. Die Temperaturkontrollwände mit den daran haftenden Kassettenteilen werden nun wieder gegeneinander bewegt, bis der Rahmen dichtend an der Rückplatte 35 und der Dichtung 36 anliegt und einen ersten Färberaum definiert. Über die dritten Öffnungen 45 oder allenfalls vorgesehene erste oder zweite Öffnungen 43,44 kann nun eine Färbelösung zur Sichtbarmachung der aufgetrennten Proteine in den ersten Färberaum eingeleitet und dabei die hintere Oberfläche des SDS-Gels exponiert werden.
   Alternativ zu der eben beschriebenen Bereitstellung eines Färberaums kann die Dichtung 36 aufblasbar sein, so dass über ein synchrones Aufblasen der elastischen Dichtung 36, Einlassen des Trennmediums und auseinander Bewegen einer oder beider Temperaturkontrollwände ebenfalls auf einer oder beiden Seiten des SDS-Gels 50 ein Färberaum bereitgestellt wird.
- Falls gewünscht, kann in einem zweiten, ähnlichen Schritt ein zweiter Färberaum zwischen dem SDS-Gel 50 und der Frontplatte 34 geschaffen werden und auch diese vordere Oberfläche des Gels 50 gegenüber der Färbelösung exponiert werden
   Alternativ zum Einsetzen eines Rahmens können die beiden Platten 34,35 auch sequenziell gegen solche mit geeigneter Geometrie, d.h. Platten 34,35 mit einem daran bereits vorgesehenen Rahmen, ausgetauscht werden.
- Nach dem ein- oder beidseitigen Färben des Gels mit an sich bekannten Lösungen wird das Gel 50 mit der Dichtung 36 auf eine Oberfläche gelegt und vorzugsweise im Durchlicht abgerastert. Alternativ dazu kann das gefärbte oder ungefärbte Gel weiteren Schritten, z.B. Blotting der Proteine auf Membranen, unterworfen werden.

Bevorzugt wird das komplette 2D-Elektrophoreseverfahren (erste und zweite Dimension) mit oder ohne Färben und Abrastern der Gele bzw. Analyse der Resultate in einem computergesteuerten, automatischen System ausgeführt.

Figur 7 zeigt eine Draufsicht auf die Frontplatte 34 einer zusammengesetzten SDS-PAGE-Kassette 33, gemäss der ersten Ausführungsform, beim Giessen des SDS-Gels 50. Die Aussparung 37 ist mit einem Gelkamm 48 oder einem Blinddeckel verschlossen. Über die zweiten Öffnungen 44 wird ein fliessfähiges Gelmaterial 50 sowie eine mit diesem nicht mischbare Verdrängungsflüssigkeit (z.B. Glycerin 51) zum Definieren eines ersten Puffervolumens 53 in die Kassette 33 eingeleitet. Durch die ersten Öffnungen 43 entweicht das in Zwischenraum 49 anwesende, überfüssige Gas.

Figur 8 zeigt eine Draufsicht auf die Frontplatte 34 einer zusammengesetzten SDS-PAGE-Kassette 33, gemäss der ersten Ausführungsform, nach dem Einsetzen eines Streifenhalters 1 und dem Ausgiessen mit einem Kontaktgel 52, beim Durchführen der SDS-PAGE. Zur Verminderung eines möglichen Spannungsabfalls in den beiden Puffervolumen sind bevorzugt die inneren Oberflächen der beiden Platten 34,35 mit einer elektrisch leitenden Schicht 55 versehen. Solche Schichten 55 können Metalle umfassen und mittels PVD (Physical Vapour Deposition, wie z.B. Sputtern oder Aufdampfen) oder CVD (Chemical Vapour Deposition) aufgebracht werden. Bevorzugt werden dabei elektrisch hochleitende Metalle (wie Gold oder Platin) gewählt, die chemisch inert sind. Als haftungsvermittelnde Schichten zwischen den Glasplatten 34,35 und den Leiterschichten eignen sich insbesondere Chromschichten.

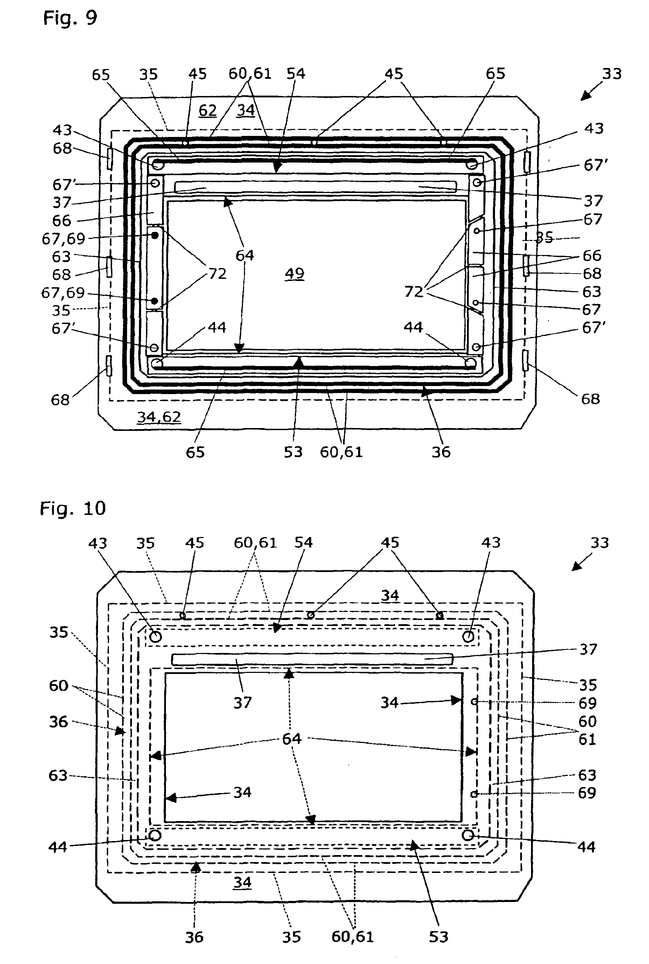

Figur 9 zeigt eine Draufsicht auf die Innenseite der Frontplatte 34 einer zusammengesetzten SDS-PAGE-Kassette einer zweiten Ausführungsform, beim Giessen des SDS-Gels. Diese zweite Ausführungsform ist dadurch gekennzeichnet, dass eine Dichtung 36 mit einem oder zwei O-Ringen bzw. Dichtlippen 60 vorgesehen ist. Diese O-Ringe bzw. Dichtlippen 60 bestehen vorzugsweise aus Viton oder Weich-PVC. Falls O-Ringe 60 verwendet werden, weist die Frontplatte 34 eine oder zwei entsprechende, ringförmige Vertiefungen 61 auf, welche vorzugsweise gerade so tief sind, dass die O-Ringe im unbelasteten Zustand über die Innenseite 62 der Frontplatte 34 herausstehen. Als alternative Ausführungsform kann vorgesehen sein, dass der einzelne O-Ring bzw. die einzelne Dichtlippe oder die zwei O-Ringe bzw. Dichtlippen an die Frontplatte 34 angespritzt sind, so dass im Wesentlichen die gleichen geometrischen Bedingungen erreicht werden. Speziell bevorzugt wird, dass die Frontplatte 34 eine oder mehrere Erhebungen 63 zum Beaufschlagen mit der anderen Platte 35 aufweist. Dabei definieren diese Erhebungen 63 das Mass der Deformation der Dichtung 36 und damit den Abstand der Platten 34,35 zueinander. Aus diesem Abstand resultiert eine definierte Dicke des PAGE-Gels 50.

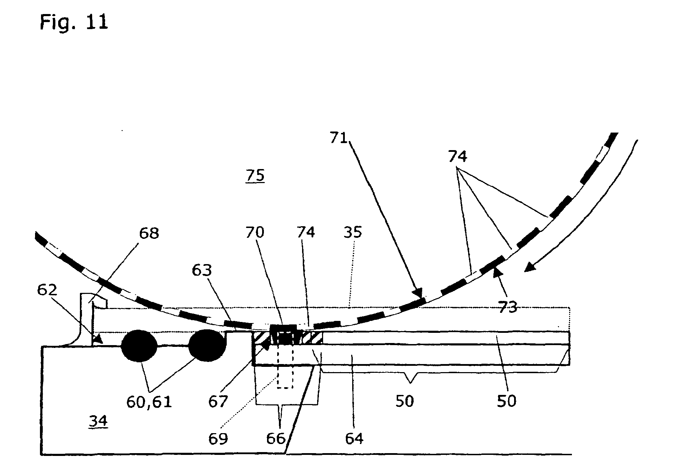

Erfindungsgemäss wird dieser definierte Abstand der Platten 34,35 bzw. die damit definierte Dicke des Gels dadurch erreicht, dass die beiden Platten 34,35 gegen einander gedrückt werden. Dieses Gegeneinanderdrücken kann mittels zwischen den beiden O-Ringen bzw. Dichtlippen 60 erzeugtem Unterduck und/oder durch das Ausüben einer flächigen Kraft auf die Aussenseiten der beiden Platten 34,35 erreicht werden. Auch das Ausüben einer linienförmigen, auf die Rückseite der die O-Ringe bzw. Dichtlippen tragenden Platte gerichteten, Kraft hat sich bewährt. Auf einer oder beiden Seiten des Gelraums 49, die entlang der Dichtung 36 verlaufen und die rechtwinklig an die Puffervolumen 53,54 anschliessen, werden bevorzugt Glasfaserstreifen 66 eingelegt und zumindest teilweise in das Gel einpolymerisiert. Diese Glasfaserstreifen 66 weisen Löcher 67,67' auf. Auf der Frontplatte 34 angeordnete Positionierstifte 69 greifen in die entsprechenden Löcher 67 in den bzw. die Glasfaserstreifen 66 ein, wodurch der bzw. die Glasfaserstreifen 66 in einer bezüglich der Frontplatte 34 und damit bezüglich der ganzen PAGE-Kassette 33 definierten Position gehalten sind. In die Löcher 67' können Abnahmestifte eines Abnahmezylinders eingreifen (vgl. Fig. 11).

Vorzugsweise sind diese Glasfaserstreifen 66 zwei oder mehrteilig gefertigt, so dass eine oder mehrere, im Wesentlichen quer zu den Glasfaserstreifen angeordnete Dilatationsfugen 72 geschaffen werden. Mit dem Vorsehen solcher Dilatationsfugen 72 können allfällige Volumenänderungen in den Gelen 50 aufgefangen werden, ohne dass diese Gele durch zu grosse Deformationen zerstört werden können. Speziell bevorzugt sind sehr schmale Glasfaserstreifen, welche gerade die Löcher 67,67' aufnehmen können, wobei wichtig ist, dass nach dem zumindest teilweisen Einfliessen von Gelmaterial 50 und nach dem Einpolymerisieren desselben, die Löcher 67,67' offen bleiben. So entstehen schlussendlich durch die Glasfaserstreifen 66 armierte Löcher 67,67' in den Gelen 50.

Bevorzugt werden die beiden Platten 34,35 provisorisch durch Clips 68 zusammen gehalten, welche über einer eingelegten Glasplatte 35 einschnappen. Vorzugsweise durch Anlegen von Vakuum über - zwischen den O-Ringen bzw. Dichtlippen 60 - angeordnete, dritte Öffnungen 45 oder einer Druckkraft werden darauf die Platten 34,35 auf die endgültige Distanz gebracht.

Figur 10 zeigt eine Draufsicht auf die Aussenseite der Frontplatte 34 einer zusammengesetzten SDS-PAGE-Kassette der zweiten Ausführungsform, beim Giessen des SDS-Gels. Die beiden O-Ringe bzw. Dichtlippen 60 der Dichtung 36 sind gestrichelt gezeichnet, ebenso wie der Umriss einer relativ dünnen Glasplatte 64, welche in die Frontplatte 34 eingeklebt oder mit dem Kunststoff dieser Frontplatte umspritzt ist. Weil diese Frontplatte 34 recht massiv ausgebildet sein kann, weist sie vorzugsweise vertiefte und dadurch vergrösserte erste und zweite Puffervolumen 53,54 auf, die hier auch gestrichelt gezeichnet sind. In diese Puffervolumen 53,54 münden die ersten und zweiten Öffnungen 43,44 zum Einleiten eines Gels, Puffers oder Färbemittels bzw. zum Entlüften. Zudem sind in diesen Puffervolumen bevorzugt Elektrodenstäbe 65 angeordnet (vgl. Fig. 9), welche später von Puffer umgeben und über Zuleitungen mit der Hochspannungssteuerung verbunden werden. Erfindungsgemäss weist auch diese Frontplatte 34 der Gelelektrophoresekassette 33 gemäss der zweiten Ausführungsform eine Aussparung 37 auf. Diese Aussparung 37 ist in ihrer Grösse und Form angepasst an einen Streifenhalter 1 mit einer eine Tragfläche 2. Auf dieser Tragfläche 2 wird ein Geistreifen 3 für die isoelektrische Fokussierung von Molekülen mittels Gelelektrophorese aufgenommen. Der Streifenhalter 1 umfasst eine Grundplatte 4, welche zumindest einen gegenüber der Tragfläche 2 tiefergesetzten Anschlag 5) und zumindest eine Dichtfläche 6 umfasst. Dieser Anschlag 5 ist zum Beaufschlagen von Gegenflächen 7 einer Elektrophoresekammer, also einer IEF-Kammer 15 oder einer SDS-PAGE-Kassette 33 ausgebildet. Durch das Tiefersetzen des Anschlags 5 gegenüber der Tragfläche 2 wird die Einbautiefe des einen Geistreifen 3 tragenden Streifenhalters 1 in dieser Gelelektrophoresekassette 33 bestimmt. Dabei ist der Streifenhalter 1 so in diese Aussparung 37 einsetzbar ist, dass der Anschlag 5 der Grundplatte 4 die äussere Oberfläche der Frontplatte 34 beaufschlägt und die Dichtfläche 6 dichtend an der inneren Oberfläche 38 der Aussparung 37 anliegt.

Figur 11 zeigt einen vertikalen Querschnitt durch eine geöffnete SDS-PAGE-Kassette einer zweiten Ausführungsform, beim Abnehmen des Gels mit einem Abnahmezylinder. Dieses Abnehmen eines SDS-PAGE Gels 50 nach der Elektrophorese wird insbesondere dann notwendig, wenn das Gel von beiden Seiten gefärbt werden soll. Zum Abnehmen des Gels 50 von der relativ dünnen Glasplatte 64 wird ein Abnahmezylinder 71 mit Abnahmestiften 70 den einpolymerisierten, gelochten Glasfaserstreifen 66 angenähert bis die Abnahmestifte 70 in die in Abstand und Dimension entsprechenden Löcher 67' der Glasfaserstreifen eingreifen. Der Abnahmezylinder 71 weist an seiner Oberfläche 73 vorzugsweise Sauglöcher 74 auf, welche mit einem Unterdruckraum 75 im Innern des Abnahmezylinders 71 verbundenen sind. Dieser Unterdruckraum 75 ist vorzugsweise über eine Unterdruckleitung mit einer Saugpumpe verbunden (nicht gezeigt). Nach dem eben beschriebenen Positionieren des Abnahmezylinders 71 am Gel 50 wird im Inneren des Abnahmezylinders ein Unterdruck erzeugt und dadurch einer oder mehrere einpolymerisierte Glasfaserstreifen 66 zusammen mit einer Portion des unmittelbar anschliessenden Gels 50 angesogen und am Abnahmezylinder 71 gehalten. Zusätzliche Sauglöcher 74 zum Halten des Gels 50 können auch auf einem grösseren Bereich des Aufnahmezylinders 71 verteilt sein. Darauf wird das SDS-Gel auf dem sich drehenden Abnahmezylinder 71 aufgerollt und so zu einem Färbebad (nicht gezeigt) transportiert.

Anschliessend lässt man das Gel durch Abrollen vom Abnahmezylinder in ein Färbebad gleiten. Bevorzugt wird dies so ausgeführt, dass die armierten Löcher 67 des Gels 50 in Positionierstifte eingreifen, welche im Färbebad angeordnet sind. Dadurch kann das gefärbte Gel wieder in definierter Weise (wie bereits beim Abnehmen von der Glasplatte 64) und automatisiert aus dem Färbebad entnommen und zu einem Analysegerät (nicht gezeigt) gebracht werden.

In Abweichung von den gezeigten Figuren, können Teile der IEF-Kammer 15 (z.B. Grundplatte 4 mit Lippendichtung 11 oder O-Ring 13; Rahmen 16 mit Dekkel 20) und/oder der SDS-PAGE-Kassette 33 in funktionelle, einstückig produzierte Einheiten zusammengefasst werden. Die Bezugszeichen bezeichnen jeweils gleiche Merkmale, auch wenn nicht zu jeder Figur alle Merkmale ausdrücklich benannt werden.

## Patentansprüche

1. Gelelektrophoresekassette (33), welche zwei Platten (34,35) und zumindest eine diese Platten beabstandende Dichtung (36) umfasst, wobei diese Dichtung (36) als eine einstückige, ringförmige Dichtung ausgebildet und im wesentlichen im Bereich des äusseren Randes der Platten (34,35) angeordnet ist, und wobei eine der Platten (34,35) in ihrer Fläche innerhalb der ringförmigen Dichtung (36) eine Aussparung (37) umfasst, **dadurch gekennzeichnet, dass** die Gelelektrophoresekassette (33) einen Streifenhalter (1) mit einer Tragfläche (2) - zum Aufnehmen eines Gelstreifens (3) für die isoelektrische Fokussierung von Molekülen mittels Gelelektrophorese - umfasst, wobei der Streifenhalter (1) in die, in ihrer Grösse und Form an den Streifenhalter (1) angepasste Aussparung (37) dichtend eingesetzt ist und eine Grundplatte (4) mit zumindest einem gegenüber der Tragfläche (2) tiefergesetzten Anschlag (5) und zumindest einer Dichtfläche (6) umfasst.

2. Kassette (33) nach Anspruch 1, **dadurch gekennzeichnet, dass** dieser Anschlag (5) zum Beaufschlagen von Gegenflächen (7) der Gelelektrophoresekassette (33) ausgebildet ist und durch das Tiefersetzen gegenüber der Tragfläche (2) die Einbautiefe des einen Gelstreifen (3) tragenden Streifenhalters (1) in dieser Gelelektrophoresekassette (33) bestimmt ist.

3. Kassette (33) nach Anspruch 1 oder 2, **dadurch gekennzeichnet, dass** der Streifenhalter (1) so in diese Aussparung (37) eingesetzt ist, dass der Anschlag (5) der Grundplatte (4) die äussere Oberfläche der Platte (34,35) beaufschlägt und die Dichtfläche (6) dichtend an der inneren Oberfläche (38) der Aussparung (37) anliegt.

4. Kassette (33) nach einem der vorhergehenden Ansprüche, **dadurch gekennzeichnet, dass** die Dichtung (36) eine Flachdichtung ist und auf beiden den Platten (34,35) anliegenden Seiten (39) je eine ringförmig umlaufende, elastisch deformierbare Dichtkante (40) umfasst.

5. Kassette (33) nach einem der Ansprüche 1 bis 3, **dadurch gekennzeichnet, dass** die Dichtung (36) eine O-Ringdichtung mit einem oder zwei O-Ringen (60) ist.

6. Kassette (33) nach einem der Ansprüche 1 bis 3, **dadurch gekennzeichnet, dass** die Dichtung (36) eine Lippendichtung mit einer oder zwei Dichtlippen (60) ist.

7. Kassette (33) nach einem der vorhergehenden Ansprüche, **dadurch gekennzeichnet, dass** zumindest eine der beiden Platten (34,35) Erhebungen (63) zum Beaufschlagen mit der anderen Platte (34,35) aufweist, wobei diese Erhebungen (63) das Mass der Deformation der Dichtung (36) und damit den Abstand der Platten (34,35) zueinander definieren.

8. Kassette (33) nach einem der vorhergehenden Ansprüche, **dadurch gekennzeichnet, dass** zumindest eine der Platten (34,35) im Bereich des innerhalb von der Dichtung (36) definierten Raums angeordnete erste Öffnungen (43) bzw. zweite Öffnungen (44) zum Entlüften oder zum Einleiten eines Gels, Puffers oder Färbemittels umfasst.

9. Kassette (33) nach einem der vorhergehenden Ansprüche, **dadurch gekennzeichnet, dass** zumindest eine der Platten (34,35) im Bereich des innerhalb von der Dichtung (36) abgedeckten Raums angeordnete, dritte Öffnungen (45) zum Einleiten eines Trennmediums bzw. zum Anlegen eines Unterdrucks umfasst.

10. System mit einer Arbeitsplattform, welche zum Anordnen einer oder mehrerer Gelelektrophoresekassetten und zum Durchführen von SDS-PAGE Gelelektrophoresen ausgebildet ist, **dadurch gekennzeichnet, dass** das System zumindest eine Gelelektrophoresekassette (33) gemäss einem der Ansprüche 1 bis 9 umfasst.

11. System nach Anspruch 10, **dadurch gekennzeichnet, dass** es zudem eine oder mehrere IEF-Kammern (15) mit je einem Rahmen (16) mit einer umlaufenden Wand (17) sowie einer unteren und oberen Gegenfläche (18,18')
- für die isoelektrische Fokussierung von Molekülen in Gelstreifen - umfasst, wobei der Streifenhalter (1) so in den Rahmen (16) einsetzbar ist, dass der zumindest eine Anschlag (5) die untere Gegenfläche (18) beaufschlägt und die Dichtfläche (6) dichtend an einer inneren Oberfläche (19) der Wand (17) anliegt.

12. System nach Anspruch 10 oder 11, **dadurch gekennzeichnet, dass** es eine Temperaturkontrollvorrichtung für die SDS-PAGE-Kassetten (33) und/oder die IEF-Kammern (15) umfasst.

13. System nach Anspruch 12, wobei die Temperaturkontrollvorrichtung für die SDS-PAGE-Kassetten (33) zumindest eine Temperaturkontrollwand umfasst, die über eine Flächenberührung mit der Kassettenwand (34,35) die Temperatur des Gels während der Polymerisierung bzw. während der Elektrophorese steuert, **dadurch gekennzeichnet, dass** die Temperaturkontrollvorrichtung zwei Temperaturkontrollwände umfasst, die zwischen sich eine Kassette (33) aufnehmen und jeweils gegen eine Wand (34,35) der eingelegten Kassette (33) gerichtete Saugöffnungen umfassen.

14. System nach einem der Ansprüche 11 bis 13 **dadurch gekennzeichnet, dass** es einen Roboterarm zum Transferieren von einzeln Teilen der Kammern (15) bzw. Kassetten (33) von und zu diesen IEF-Kammern (15) bzw. diesen SDS-PAGE-Kassetten (33) sowie einen Rechner zum Steuern des Roboters, eine Einzeikanal-Hochspannungssteuerung zur individuellen Ansteuerung der IEF-Kammern (15) und einen Bildschirm umfasst.

15. 2D-Gelelektrophorese-Verfahren, **dadurch gekennzeichnet, dass** ein dehydratisierter Gelstreifen (3) auf der Tragfläche (2) einer Grundplatte (4) eines Streifenhalters (1) positioniert wird, wobei diese Grundplatte (4) zumindest einen gegenüber der Tragfläche (2) tiefergesetzten Anschlag (5) und zumindest eine Dichtfläche (6) umfasst, wobei dieser Anschlag (5) zum Beaufschlagen von Gegenflächen (7) sowohl von einer IEF-Kammer (15) als auch von einer SDS-PAGE-Kassette (33) ausgebildet ist und durch das Tiefersetzen gegenüber der Tragfläche (2) die Einbautiefe des einen Getstreifen (3) tragenden Streifenhalters (1) in diesen Elektrophoresekammern bestimmt wird.

16. Verfahren nach Anspruch 14, **dadurch gekennzeichnet, dass** dieser Streifenhalter (1) zur Bildung einer IEF-Kammer (15) in einen Rahmen (16) mit einer umlaufenden Wand (17) sowie einer unteren und oberen Gegenfläche (18,18') so eingesetzt wird, dass der zumindest eine Anschlag (5) die untere Gegenfläche (18) beaufschlägt und die Dichtfläche (6) dichtend an einer inneren Oberfläche (19) der Wand (17) anliegt, und dass der Gelstreifen (3) im Innenraum (22) dieser Kammer (15) mit Rehydratisierlösung überschichtet und eine Probe auf den Gelstreifen (3) aufgetragen wird.

17. Verfahren nach Anspruch 16, **dadurch gekennzeichnet, dass** die Probe auf das Gel (3) aufgetragen und die Kammer (15) mit einem Deckel (20) zum Beaufschlagen der oberen Gegenfläche (18') des Rahmens (16) und mit zwei in diesem Deckel (20) einsetzbaren Elektrodenhalterungen (24,24') geschlossen wird, indem die Elektrodenhalterungen (24,24') in ein oberes oder unteres Niveau (25,25') eingesetzt werden, wodurch je eine Elektrode (27), welche jeweils senkrecht zur Oberfläche (26) eines auf der Tragfläche (2) des Streifenhalters (1) liegenden Gelstreifens (3) beschränkt beweglich ist, beabstandet zu dieser Oberfläche (26) steht oder diese Oberfläche (26) kontaktiert.

18. Verfahren nach Anspruch 17, wobei der Geistreifen (3) über die Elektroden (27) unter elektrische Hochspannung gesetzt wird, bis die isoetektrische Fokussierung der Moleküle im Gel (3) stattgefunden hat, und dass mittels einer Temperaturkontrollvorrichtung die Temperatur des Gels (3) während dieser Elektrophorese der ersten Dimension gesteuert wird, **dadurch gekennzeichnet, dass** die elektrische Hochspannung mit einem Einzelkanalsteuergerät erzeugt wird, welches die elektrischen Stromparameter regelt und zudem abrufbar und z.B. auf einem Bildschirm anzeigbar speichert.

19. Verfahren nach einem der Ansprüche 15 bis 18, **dadurch gekennzeichnet, dass** eine Gelelektrophoresekassette (33) gemäss Anspruch 1 zwischen den Temperaturkontrollwänden eines Systems gemäss Anspruch 10 oder 11 angeordnet und von diesen so beaufschlagt wird, dass die Dichtung (36) elastisch deformiert wird und der Abstand zwischen den Platten (34,35) der Kassette (33) im wesentlichen durch Erhebungen (63) zum Beaufschlagen mit der anderen Platte (34,35) definiert wird, und dass zwischen je einer Platte (34,35) der Kassette (33) und je einer Temperaturkontrollwand über die Saugöffnungen ein Unterdruck aufgebaut wird.

20. Verfahren nach Anspruch 19, **dadurch gekennzeichnet, dass** die Aussparung (37) mit einem Gelkamm (48) oder mit einem Blinddeckel verschlossen wird, wobei bei einer Verwendung des Blinddeckels ein Mittel zum Definieren einer geraden Giesskante des zu giessenden Gels in die Kassette gegeben wird, und dass über die zweiten Öffnungen (44) ein fliessfähiges Gelmaterial (50) sowie eine mit diesem nicht mischbare Verdrängungsflüssigkeit zum Definieren eines ersten Puffervolumens (53) in die Kassette eingeleitet wird.

21. Verfahren nach Anspruch 20, **dadurch gekennzeichnet, dass** gelochte Glasfaserstreifen (66) zwischen die Platten (34,35) der Kassette (33) gelegt werden, und dass diese Glasfaserstreifen (66) zumindest teilweise in das Gelmaterial (50) einpolymerisiert werden.

22. Verfahren nach Anspruch 20, **dadurch gekennzeichnet, dass** die Dichtung (36) Befestigungslaschen (46) umfasst, und dass diese Befestigungslaschen (46) zwischen die Platten (34,35) der Kassette (33) gelegt werden, und dass diese Befestigungslaschen (46) in das Gelmaterial (50) einpolymerisiert werden.

23. Verfahren nach Anspruch 20 oder 22, **dadurch gekennzeichnet, dass** das SDS-Gel (50) in der Kassette (33) unter kontrollierten Temperaturbedingungen polymerisiert wird, dass - falls vorhanden - das Mittel zum Definieren einer geraden Giesskante im SDS-Gel (50) und die Verdrängungsflüssigkeit aus der Kassette (33) entfernt werden, dass ein Streifenhalter (1) mit einem IEF-Streifen (3) dichtend in die Aussparung (37) eingesetzt wird und dass - unter Bildung eines zweiten Puffervolumens - über eine der ersten Öffnungen (43) ein Kontaktgel zum Kontaktieren des IEF-Streifens mit dem SDS-Gel in die Kassette eingeleitet und polymerisiert wird.

24. Verfahren nach Anspruch 23, **dadurch gekennzeichnet, dass** das erste und zweite Puffervolumen über die zweiten und ersten Öffnungen (44,43) im wesentlichen mit Pufferlösung gefüllt, diese Puffervolumina (43,44) mit je einem Pol einer Hochspannungsquelle verbunden und die SDS-Gelelektrophorese bei kontrollierten Temperaturbedingungen ausgeführt wird.

25. Verfahren nach Anspruch 24, **dadurch gekennzeichnet, dass** die SDS-Gelelektrophorese in einer längs aufrecht stehenden Position der Kassette (33) durchgeführt wird.

26. Verfahren nach Anspruch 24 oder 25, **dadurch gekennzeichnet, dass** zum Färben bzw. Abrastern des SDS-Gels (50) ein Trennmedium über die dritten Öffnungen (45) in zumindest einer Kassettenwand (34,35) eingeleitet und eine Platte oder beide Platten (34,35) der Kassette (33) vom SDS-Gel (50) und der Dichtung (36) getrennt werden, worauf eine oder beide freigelegten Oberflächen des SDS-Gels (50) gegenüber einer Färbelösung exponiert und nach dem Färben gegenüber einer Rastereinrichtung ausgerichtet werden.

27. Verfahren nach Anspruch 26, **dadurch gekennzeichnet, dass** das SDS-Gel (50) von einer Platte (34,35) abgenommen wird, indem ein Abnahmezylinder (71) mit Abnahmestiften (70) den einpolymerisierten, gelochten Glasfaserstreifen (66) angenähert wird, bis die Abnahmestifte (70) in die Löcher (67') der Glasfaserstreifen (66) eingreifen, worauf das SDS-Gel (50) auf dem sich drehenden Abnahmezylinder (71) aufgerollt wird.

28. Verfahren nach Anspruch 27, **dadurch gekennzeichnet, dass** der Abnahmezylinder (71) an seiner Oberfläche (73) Sauglöcher (74) umfasst, über welche zumindest einer oder mehrere in das Gel (50) einpolymerisierte Glasfaserstreifen (66) zusammen mit einer Portion des unmittelbar anschliessenden Gels (50) angesogen und am Abnahrnezylinder 71 gehalten werden.

29. Verfahren nach einem der Ansprüche 15 bis 28, **dadurch gekennzeichnet, dass** all diese Verfahrensschritte in einem System gemäss einem der Ansprüche 10 bis 14 automatisch ausgeführt werden.

## Revendications

1. Cassette d'électrophorèse sur gel (33), comprenant deux plaques (34, 35) et au moins un joint (36) écartant ces plaques, ce joint (36) étant conçu comme un joint annulaire d'un seul tenant et étant pour l'essentiel placé dans la zone du bord externe des plaques (34, 35), et l'une des plaques (34, 35) présentant un évidement (37) dans sa surface, à l'intérieur du joint annulaire (36), **caractérisée en ce que** la cassette d'électrophorèse sur gel (33) comprend un support de bande (1) avec une surface d'appui (2) - afin de recevoir une bande de gel (3) pour la focalisation isoélectrique de molécules par électrophorèse sur gel - le support de bande (1) étant placé de façon étanche dans l'évidement (37), dont la taille et la forme sont adaptées au dit support de bande (1), et comprend aussi un socle (4) avec au moins une butée (5) placée plus bas que la surface d'appui (2) et au moins une face d'étanchéité (6).

2. Cassette (33) conforme à la revendication 1, **caractérisée en ce que** ladite butée (5) est conçue pour appuyer sur les contre-surfaces (7) de la cassette d'électrophorèse sur gel (33) et **en ce qu'**elle détermine, du fait qu'elle est placée plus bas que la surface d'appui (2), la profondeur d'insertion du support de bande (1) recevant une bande de gel (3).

3. Cassette (33) conforme à la revendication 1 ou 2, **caractérisée en ce que** le support de bande (1) est placé dans l'évidement (37) de façon à ce que la butée (5) du socle (4) appuie sur la surface externe de la plaque (34, 35) et que la face d'étanchéité (6) adhère uniformément à la surface interne (38) de l'évidement (37).

4. Cassette (33) conforme à l'une des revendications précédentes, **caractérisée en ce que** le joint (36) est un joint plat et comporte, sur ses deux côtés (39) adjacents aux plaques (34, 35), un bord d'étanchéité (40) externe de forme annulaire pouvant se déformer de façon élastique.

5. Cassette (33) conforme à l'une des revendications 1 à 3, **caractérisée en ce que** le joint (36) est un joint torique d'étanchéité comprenant un ou deux anneaux toriques (60).

6. Cassette (33) conforme à l'une des revendications 1 à 3, **caractérisée en ce que** le joint (36) est un joint à lèvres comprenant une ou deux lèvres d'étanchéité (60).

7. Cassette (33) conforme à l'une des revendications précédentes, **caractérisée en ce qu'**au moins l'une des deux plaques (34, 35) présente des saillies (63) venant s'appuyer sur l'autre plaque (34, 35), ces saillies (63) déterminant l'importance de la déformation du joint (36) et, par conséquent, l'écart entre les plaques (34, 35).

8. Cassette (33) conforme à l'une des revendications précédentes, **caractérisée en ce qu'**au moins l'une des deux plaques (34, 35) comprend une première série d'ouvertures (43) et éventuellement une deuxième série d'ouvertures (44), placées dans la zone de l'espace délimité à l'intérieur du joint (36) et destinées à la ventilation ou à l'introduction d'un gel, d'un tampon ou d'un agent de coloration.

9. Cassette (33) conforme à l'une des revendications précédentes, **caractérisée en ce qu'**au moins l'une des deux plaques (34, 35) comprend une troisième série d'ouvertures (45) placées dans la zone de l'espace recouvert par le joint (36) et destinées à introduire un agent de séparation ou à appliquer une pression négative.

10. Système comportant une plate-forme de travail conçue pour l'agencement d'une ou de plusieurs cassettes d'électrophorèse sur gel et pour la réalisation d'électrophorèses sur gel de polyacrylamide en présence de dodécylsulfate de sodium (électrophorèses SDS-PAGE), **caractérisé en ce que** le système comprend au moins une cassette d'électrophorèse sur gel (33) conforme à l'une des revendications 1 à 9.

11. Système conforme à la revendication 10, **caractérisé en ce qu'**il comporte en plus un ou plusieurs compartiments d'isoélectrofocalisation (IEF) (15) composés chacun d'un cadre (16) comprenant une paroi externe (17) ainsi qu'une contre-surface inférieure et supérieure (18, 18') (pour l'isoélectrofocalisation de molécules dans des bandes de gel), le support de bande (1) pouvant être inséré dans le cadre (16) de manière à ce qu'au moins l'une des butées (5) appuie sur la contre-surface inférieure (18) et que la face d'étanchéité (6) adhère uniformément à une surface interne (19) de la paroi (17).

12. Système conforme à la revendication 10 ou 11, **caractérisé en ce qu'**il comporte un dispositif de contrôle de la température destiné aux cassettes SDS-PAGE (33) et/ou aux compartiments d'IEF (15).

13. Système conforme à la revendication 12, le dispositif de contrôle de la température destiné aux cassettes SDS-PAGE (33) comprenant au moins une paroi de contrôle de la température régulant la température du gel pendant la polymérisation ou pendant l'électrophorèse par contact avec la surface de la paroi des cassettes (34, 35), **caractérisé en ce que** le dispositif de contrôle de la température comprend deux parois de contrôle de la température entre lesquelles est disposée une cassette (33) et qui comportent chacune des ouvertures d'aspiration orientées vers une paroi (34, 35) de la cassette mise en place (33).

14. Système conforme à l'une des revendications 11 à 13, **caractérisé en ce qu'**il comporte un bras de robot servant à transférer différents éléments des compartiments (15) ou des cassettes (33) depuis et vers ces compartiments d'IEF (15) ou ces cassettes SDS-PAGE (33), ainsi qu'un ordinateur servant à commander le robot, une commande à haute tension à voie unique servant à diriger individuellement les compartiments d'IEF (15) et un écran.

15. Procédé d'électrophorèse sur gel en deux dimensions, **caractérisé en ce qu'**on place une bande de gel déshydraté (3) sur la surface d'appui (2) du socle (4) d'un support de bande (1), ce socle (4) comportant au moins une butée (5) disposée plus bas que la surface d'appui (2) et au moins une face d'étanchéité (6), la butée (5) étant conçue pour appuyer sur les contre-surfaces (7) d'un compartiment d'IEF (15) ainsi que sur celles d'une cassette SDS-PAGE (33) et déterminant, du fait qu'elle est placée plus bas que la surface d'appui (2), la profondeur d'insertion du support de bande (1) recevant une bande de gel (3).

16. Procédé conforme à la revendication 15, **caractérisé en ce que** ledit support de bande (1), qui sert à former un compartiment d'IEF (15) dans un cadre (16) comportant une paroi externe (17) ainsi qu'une contre-surface inférieure et supérieure (18, 18'), est inséré de façon à ce qu'au moins l'une des butées (5) appuie sur la contre-surface inférieure (18) et que la face d'étanchéité (6) adhère uniformément à l'une des surfaces internes (19) de la paroi (17), et **en ce que** la bande de gel (3) est recouverte d'une solution de réhydratation dans l'espace interne (22) de ce compartiment (15) et qu'un échantillon est appliqué sur la bande de gel (3).

17. Procédé conforme à la revendication 16, **caractérisé en ce que** l'échantillon est appliqué sur le gel (3) et **en ce que** le compartiment (15) est fermé par un couvercle (20), appuyant sur la contre-surface supérieure (18') du cadre (16), et par deux supports d'électrode (24, 24') pouvant être logés dans ce couvercle (20), les supports d'électrode (24, 24') étant placés à un niveau supérieur ou inférieur (25, 25'), ce qui fait que chaque électrode (27), se déplaçant de façon limitée perpendiculairement à la surface (26) d'une bande de gel (3) placée sur la surface d'appui (2) du support de bande (1), est soit écartée de cette surface (26), soit en contact avec celle-ci.

18. Procédé conforme à la revendication 17, la bande de gel (3) étant soumise, au moyen des électrodes (27), à une haute tension électrique jusqu'à ce que se soit produite la focalisation isoélectrique des molécules dans le gel (3) et la température du gel (3) étant régulée, pendant la première dimension de cette électrophorèse, par un dispositif de contrôle de la température, **caractérisé en ce que** la haute tension électrique est produite par un contrôleur à voie unique réglant les paramètres de courant électrique et permettant en outre de les consulter ou de les afficher, par exemple sur un écran.

19. Procédé conforme à l'une des revendications 15 à 18, **caractérisé en ce qu'**une cassette d'électrophorèse sur gel (33) conforme à la revendication 1 est placée entre les parois de contrôle de la température d'un système conforme à la revendication 10 ou 11 et est comprimée par celles-ci de sorte que le joint (36) subit une déformation élastique et que l'écart entre les plaques (34, 35) de la cassette (33) est principalement défini par les saillies (63) venant s'appuyer sur l'autre plaque (34, 35), et **en ce qu'**une pression négative est créée entre chaque plaque (34, 35) de la cassette (33) et chaque paroi de contrôle de la température par les ouvertures d'aspiration.

20. Procédé conforme à la revendication 19, **caractérisé en ce que** l'évidement (37) est fermé par un peigne à gel (48) ou par un couvercle aveugle, l'utilisation d'un couvercle aveugle constituant un moyen de délimiter un bord de coulée droit pour le gel à verser dans la cassette, et **en ce qu'**on introduit par la deuxième série d'ouvertures (44) un gel fluide (50) ainsi qu'un fluide de déplacement, non miscible avec celui-ci, afin de définir un premier volume de tampon (53) dans la cassette.

21. Procédé conforme à la revendication 20, **caractérisé en ce que** des bandes perforées en fibre de verre (66) sont placées entre les plaques (34, 35) de la cassette (33), et **en ce que** ces bandes en fibre de verre (66) sont incorporées dans le gel (50), au moins partiellement, par polymérisation

22. Procédé conforme à la revendication 20, **caractérisé en ce que** le joint (36) comporte des languettes de fixation (46), et **en ce que** ces languettes de fixation (46) sont placées entre les plaques (34, 35) de la cassette (33), et **en ce que** lesdites languettes sont incorporées dans le gel (50) par polymérisation.

23. Procédé conforme à la revendication 20 ou 22, **caractérisé en ce que** le gel SDS (50) est polymérisé dans la cassette (33) dans des conditions de température contrôlées, **en ce qu'**on enlève de la cassette (33), le cas échéant, le moyen servant à délimiter un bord de coulée droit dans le gel SDS (50) ainsi que le fluide de déplacement, **en ce qu'**un support de bande (1) muni d'une bande d'IEF (3) est placé de façon étanche dans l'évidement (37) et **en ce que**, lorsqu'un deuxième volume de tampon est formé, un gel de contact est introduit par l'une des premières ouvertures (43), afin de mettre la bande d'IEF en contact avec le gel SDS dans la cassette, et est polymérisé.

24. Procédé conforme à la revendication 23, **caractérisé en ce que** le premier et le deuxième volumes de tampon sont principalement remplis, par les deuxièmes et les premières ouvertures (44, 43), avec une solution tampon, **en ce que** ces volumes de tampon (43, 44) sont reliés chacun à un pôle d'une source de haute tension et **en ce que** l'électrophorèse sur gel SDS est effectuée à des conditions de température contrôlées.

25. Procédé conforme à la revendication 24, **caractérisé en ce que** l'électrophorèse sur gel SDS est effectuée lorsque la cassette (33) est placée debout dans la longueur.

26. Procédé conforme à la revendication 24 ou 25, **caractérisé en ce qu'**un agent de séparation est introduit, par les troisièmes ouvertures (45), dans au moins une des parois de la cassette (34, 35) afin de colorer ou de scanner le gel SDS (50), et une plaque ou les deux plaques (34, 35) de la cassette (33) est/sont alors séparée(s) du gel SDS (50) et du joint (36), à la suite de quoi l'une des surfaces ou les deux surfaces découvertes du gel SDS (50) est/sont exposée(s) à une solution colorée, et alignée(s), après la coloration, en face d'un appareil de scannage.

27. Procédé conforme à la revendication 26, **caractérisé en ce que** le gel SDS (50) est retiré d'une plaque (34, 35) en approchant un cylindre d'enlèvement (71), muni de pointes d'enlèvement (70), de la bande en fibre de verre (66) perforée incorporée par polymérisation, jusqu'à ce que les pointes d'enlèvement (70) pénètrent dans les perforations (67') de la bande en fibre de verre (66), ce qui entraîne l'enroulement du gel SDS (50) sur le cylindre d'enlèvement (71) tournant.

28. Procédé conforme à la revendication 27, **caractérisé en ce que** le cylindre d'enlèvement (71) comporte des trous d'aspiration (74) sur sa surface (73), au moyen desquels au moins une ou plusieurs bandes en fibre de verre (66) incorporées dans le gel (50) par polymérisation est/sont aspirée(s) en même temps qu'une partie du gel (50) se trouvant juste à côté et est/sont retenue(s) sur le cylindre d'enlèvement (71).

29. Procédé conforme à l'une des revendications 15 à 28, **caractérisé en ce que** toutes les étapes de ce procédé sont automatiquement exécutées dans un système conforme à l'une des revendications 10 à 14.

## Claims

1. Gel electrophoresis cassette (33) that comprises two plates (34,35) and at least one seal (36) spacing said plates, whereby this seal (36) is embodied as a single-piece, ring-shaped seal and is arranged substantially in the region of the outer edge of the plates (34,35), and whereby one of the plates (34,35) in its area within the ring-shaped seal (36) comprises a recess (37),
**characterized in that**
the gel electrophoresis cassette (33) comprises a strip holder (1) with a carrier face (2) to hold a gel strip (3) for the isoelectric focusing of molecules by means of gel electrophoresis, whereby the strip holder (1) is inserted to seal in the recess (37), matched to the strip holder (1) in size and shape, and comprises a baseplate (4) with at least one stop (5) set lower with respect to the carrier face (2) and at least one sealing face (6).

2. Cassette (33) according to claim 1,
**characterized in that**
said stop (5) is embodied for application to mating faces (7) of the gel electrophoresis cassette (33) and the insertion depth of the strip holder (1) carrying a gel strip (3) in the gel electrophoresis cassette (33) is determined by its being set lower with respect to the carrier face (2).

3. Cassette(33) according to claim 1 or 2,
**characterized in that**
the strip holder (1) is inserted in the recess (37) such that the stop (5) of the baseplate (4) applies to the outer surface of the plate (34,35), and the sealing face (6) sealingly adjoins the inner surface (38) of the recess (37).

4. Cassette(33) according to one of the preceding claims,
**characterized in that**
the seal (36) is a flat seal and on each of the two sides (39) adjoining the plates (34,35) comprises an annular, elastically deformable sealing edge (40).

5. Cassette(33) according to one of the claims 1 through 3,
**characterized in that**
the seal (36) is an O-ring seal with one or two O-rings (60).

6. Cassette(33) according to one of the claims 1 through 3,
**characterized in that**
the seal (36) is a lip seal with one or two sealing lips (60).

7. Cassette(33) according to one of the preceding claims,
**characterized in that**
at least one of the two plates (34,35) exhibits elevations (63) for application to the other plate (34,35), whereby said elevations (63) define the measure of the deformation of the seal (36) and thus the spacing between the plates (34,35).

8. Cassette(33) according to one of the preceding claims,
**characterized in that**
at least one of the two plates (34,35) comprises first openings (43) or second openings (44) arranged in the region of the space defined within the seal (36) for ventilation or for introducing a gel, buffer or dye.

9. Cassette(33) according to one of the preceding claims,
**characterized in that**
at least one of the two plates (34,35) comprises third openings (45) arranged in the region of the space encompassed by the seal (36) for introducing a separating medium or for applying a vacuum.

10. System with a work platform embodied for the arrangement of one or more gel electrophoresis cassettes and for performing SDS PAGE gel electrophoresis,
**characterized in that**
the system comprises at least one gel electrophoresis cassette (33) according to one of the claims 1 through 9.

11. System according to claim 10,
**characterized in that**
it additionally comprises one or more IEF chambers (15), each with a frame (16) with a surrounding wall (17) and a lower and upper mating face (18,18'), for isoelectric focusing of molecules in gel strips, whereby the strip holder (1) can be inserted in the frame (16) so that the at least one stop (5) applies to the lower mating face (18) and the sealing face (6) sealingly adjoins an inner surface (19) of the wall (17).

12. System according to claim 10 or 11,
**characterized in that**
it comprises a temperature control device for the SDS PAGE cassettes (33) and/or the IEF chambers (15).

13. System according to claim 12 whereby the temperature control device for the SDS PAGE cassettes (33) comprises at least one temperature control wall that, through contacting of surfaces with the cassette wall (34,35), controls the temperature of the gel during polymerization or electrophoresis,
**characterized in that**
the temperature control device comprises two temperature control walls that hold Cassette(33) between them and each comprises suction openings directed at a wall (34,35) of the inserted cassette (33).

14. System according to one of the claims 11 through 13,
**characterized in that**
it comprises a robot arm to transfer individual parts of the chambers (15) or cassettes (33) from and to these IEF chambers (15) or SDS PAGE cassettes (33), and a computer to control the robot, a single-channel high-voltage controller for individual driving of the IEF chambers (15), and a monitor.

15. 2D gel electrophoresis method,
**characterized in that**
a dehydrated gel strip (3) is positioned on the carrier face (2) of a baseplate (4) of a strip holder (1), whereby said baseplate (4) comprises at least one stop (5) set lower with respect to the carrier face (2) and at least one sealing face (6), whereby said stop (5) is embodied for application to mating faces (7) of both an IEF chamber (15) and an SDS PAGE cassette (33), and the insertion depth of the strip holder (1) carrying a gel strip (3) in the electrophoresis chambers is determined by its being set lower with respect to the carrier face (2).

16. Method according to claim 15,
**characterized in that**
this strip holder (1) is inserted in a frame (16) with a surrounding wall (17) and a lower and upper mating face (18,18') for the formation of an IEF chamber (15) so that the at least one stop (5) is applies to the lower mating face (18) and the sealing face (6) sealingly adjoins an inner surface (19) of the wall (17), and that the gel strip (3) in the interior (22) of the chamber (15) is coated with rehydrating solution and a sample is applied on the gel strip (3).

17. Method according to claim 16,
**characterized in that**
the sample is applied on the gel strip (3) and the chamber (15) is closed with a lid (20) to apply the upper mating face (18') of the frame (16) and with two electrode holders (24,24') insertable in the lid (20), by inserting the electrode holders (24,24') at an upper or lower level (25,25') whereby each electrode (27), restricted to movement perpendicular to the surface (26) of a gel strip (3) on the carrier face (2) of the strip holder (1), stands spaced apart from this surface (26) or contacts this surface (26).

18. Method according to claim 17 whereby the gel strip (3) is exposed to electric high voltage through the electrodes (27) until the isoelectric focusing of the molecules in the gel (3) has taken place, and that the temperature of the gel (3) is controlled by means of a temperature control device during this electrophoresis of the first dimension,
**characterized in that**
the electric high voltage is generated by a single-channel controller that regulates the electric current parameters and saves them for retrieval and display on a screen for example.

19. Method according to one of the claims 15 through 18,
**characterized in that**
a gel electrophoresis cassette (33) according to claim 1 is arranged between the temperature control walls of a system according to claim 10 or 11 and is acted upon by these so that the seal (36) is elastically deformed and the spacing between the plates (34,35) of the cassette (33) is substantially defined by elevations (63) for application to the other plate (34,35), and that a low-pressure is built up between each plate (34,35) of the cassette (33) and a temperature control wall via the suction openings.

20. Method according to claim 19,
**characterized in that**
the recess (37) is closed by a gel comb (48) or a dummy cover, whereby in use of the dummy cover a means for defining a straight pouring edge of the gel to be poured is entered into the cassette (33), and that a gel material (50) capable of flowing and a displacement fluid not mixable with this to define a first buffer volume (53) are introduced into the cassette (33) through the second openings (44).

21. Method according to claim 20,
**characterized in that**
perforated fiberglass strips (66) are placed between the plates (34,35) of the cassette (33) and that these fiberglass strips (66) are at least partly polymerized into the gel material (50).

22. Method according to claim 20,
**characterized in that**
the seal (36) comprises attachment tags (46) and that these attachment tags (46) are placed between the plates (34,35) of the cassette (33) and that these attachment tags (46) are polymerized into the gel material (50).

23. Method according to claim 20 or 22,
**characterized in that**
the SDS gel (50) is polymerized in the cassette (33) in controlled temperature conditions, that the means - if present -defining a straight pouring edge in the SDS gel (50) and the displacement fluid are removed from the cassette (33), that a strip holder (1) with an IEF strip (3) is inserted to seal in the recess (37), and that, forming a second buffer volume, a contact gel to contact the IEF strip (3) with the SDS gel (50) is introduced into the cassette (33) through one of the first openings (43) and polymerized.

24. Method according to claim 23,
**characterized in that**
the first and second buffer volumes are filled essentially with buffer solution through the second and first openings (44,43), these buffer volumes are each connected to a pole of a high-voltage source, and the SDS gel electrophoresis is performed in controlled temperature conditions.

25. Method according to claim 24,
**characterized in that**
the SDS gel electrophoresis is performed in an upright position of the cassette (33).

26. Method according to claim 24 or 25,
**characterized in that**
a separating medium is introduced through the third openings (45) in at least one cassette wall (34,35) to stain or scan the SDS gel (50), and one plate or both plates (34,35) of the cassette (33) are separated from the SDS gel (50) and the seal (36), whereupon one or both uncovered surfaces of the SDS gel (50) are exposed to a staining solution and after staining are directed with respect to a scanning device.

27. Method according to claim 26,
**characterized in that**
the SDS gel (50) is taken off a plate (34,35) **in that** a take-off cylinder (71) with pins (70) is moved closer to the polymerized, perforated fiberglass strips (66) until the pins (70) engage in the perforations (67') of the fiberglass strips (66) whereupon the SDS gel (50) is rolled onto the rotating take-off cylinder (71).

28. Method according to claim 27,
**characterized in that**
the take-off cylinder (71) comprises suction holes (74) on its surface (73) by which one or more fiberglass strips (66) polymerized into the gel (50) are sucked up together with a portion of the immediately adjacent gel (50) and held on the take-off cylinder (71).

29. Method according to one of the claims 15 through 28,
**characterized in that**
all the steps of the method are executed automatically in a system according to one of the claims 10 through 14.
